# FASCICULE DE BREVET EUROPEEN

(11) **EP 4 040 205 B1**
(45) Date de publication et mention de la délivrance du brevet: **09.07.2025**
(21) Numéro de dépôt: 22154755.7
(22) Date de dépôt: 02.02.2022
(51) Int. Cl.: G02B 6/44

(54) **SYSTÈME D'ARRIMAGE DE CÂBLE AU CONTENANT D'UN BOÎTIER D'ÉPISSURAGE OPTIQUE**
SYSTEM ZUM ANDOCKEN VON KABELN AN DAS GEHÄUSE EINER OPTISCHEN SPLEISSBOX
SYSTEM FOR STOWING CABLE TO THE CONTAINER OF AN OPTICAL SPLICING UNIT

(30) Priorité: 05.02.2021 FR 2101128
(43) Date de publication de la demande: 10.08.2022
(73) Titulaire: Aginode Group, 75001 Paris (FR)
(72) Inventeur: LIMA, Cyril, 08200 SEDAN (FR); MIART, Freddy, 08000 Charleville-Mezières (FR)
(74) Mandataire: Ipsilon

(56) Documents cités:
- US-A- 5 793 921
- US-A1- 2009 087 158
- US-A1- 2020 064 579

## Description

L'invention concerne un système d'arrimage de câble au contenant d'un boîtier d'épissurage optique, en particulier pour réseau de fibres optiques. Un tel boîtier est utilisé partout sur le réseau, en répartiteur optique, en boîtier étanche ou aérien, entre le central téléphonique et le bâtiment destinataire.

Un boîtier d'épissurage optique, en particulier pour réseau de fibres optiques, est essentiellement constitué d'un contenant extérieur, et, à l'intérieur du contenant, d'un organiseur support, à plusieurs cassettes portant chacune plusieurs épissures. Le contenant présente au moins un port d'entrée de câbles, encadré par, à l'intérieur un socle tubulaire, et à l'extérieur du contenant, un écrou vissé sur le socle tubulaire. Les câbles passant par le port d'entrée sont arrimés manuellement sur des supports d'arrimage solidaires du fond du contenant, en forme de doigt ou de T. L'opération d'arrimage d'un câble nécessite de brider la gaine du câble, le porteur et les mèches d'aramide ou de verre, sur les supports d'arrimage, au moyen de colliers métalliques ou plastiques, pour assurer une bonne tenue du câble arrimé, à la traction et à la compression.

L'arrimage du porteur est en général séparé de celui des mèches d'aramide. Les opérations d'arrimage étant manuelles, au fur et à mesure que le nombre des câbles augmente, le volume accessible au fond du contenant se réduit, et il est de plus en plus difficile d'arrimer un câble.

Le document US 5 793 921 A divulgue le préambule de la revendication 1.

Le document US 2009/087158 A1 divulgue un dispositif pour contraindre des câbles à fibres optiques.

Un but de l'invention est de proposer un système d'arrimage de câbles dans un boîtier d'épissurage optique, qui permette d'assurer les opérations d'arrimage pratiquement sans contrainte liée au volume disponible.

L'invention a pour objet un système d'arrimage de câble selon la revendication 1.

D'autres caractéristiques sont définies dans la revendication dépendante.

### Brève description des dessins

L'invention est décrite ci-après avec référence aux dessins annexés qui représentent :
[Fig. 1] une vue en perspective d'un exemple de réalisation d'un socle pour système d'arrimage de câble selon l'invention ;
[Fig. 2] une vue en perspective de l'extérieur, d'un support d'arrimage selon un premier mode de réalisation utile pour comprendre l'invention ;
[Fig. 3] une vue en perspective de l'intérieur, du support d'arrimage de la Fig. 2 ;
[Fig. 4] une vue en perspective de l'extérieur, d'une bague d'arrimage pour le support d'arrimage de la Fig. 2 ;
[Fig. 5] une vue en perspective de l'intérieur de la bague d'arrimage de la Fig. 4 ;
[Fig. 6] une vue en perspective du premier mode de réalisation d'un système d'arrimage de câble;
[Fig. 7] une vue en perspective d'un support d'arrimage selon un deuxième mode de réalisation, celui-ci selon l'invention ;
[Fig. 8] une vue en perspective du deuxième mode de réalisation d'un système d'arrimage de câble selon l'invention.

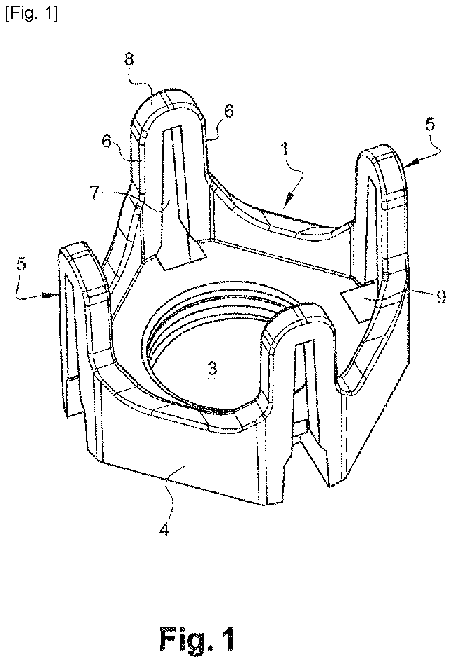

Selon l'invention le socle 1, fixable par l'écrou 2 au port d'entrée des câbles dans le contenant, présente un passage axial 3 pour les câbles (Fig. 1). Le socle 1 est à trois dimensions, il présente un pourtour 4 cylindrique, pas nécessairement de révolution, comportant plusieurs arceaux 5 régulièrement répartis sur le pourtour cylindrique 4. Les axes géométriques moyens des arceaux 5 sont parallèles entre eux et parallèles à l'axe géométrique du socle. Chaque arceau 5 comporte deux branches latérales 6 séparées par une ouverture longitudinale 7 et réunies par un sommet 8. Sur une partie de leur hauteur proche du sommet 8, les branches latérales 6 de chaque arceau ont leurs surfaces extérieures parallèles. A la base de l'ouverture longitudinale 7, le socle 1 présente une fente 9.

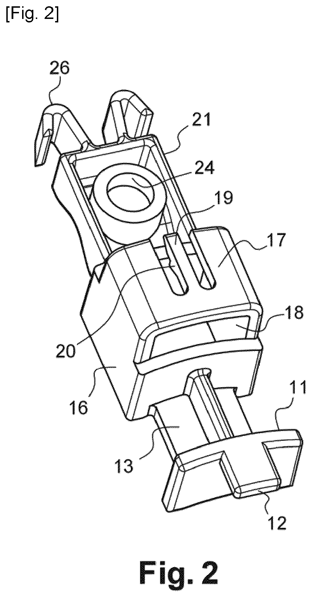

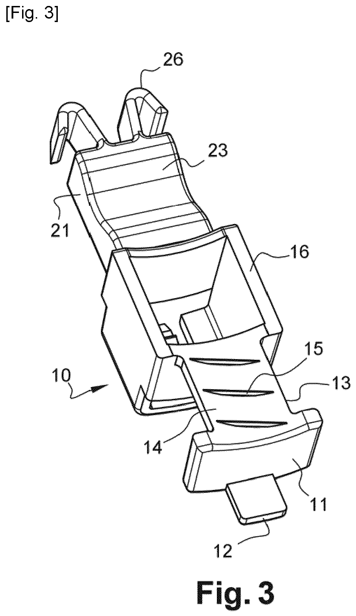

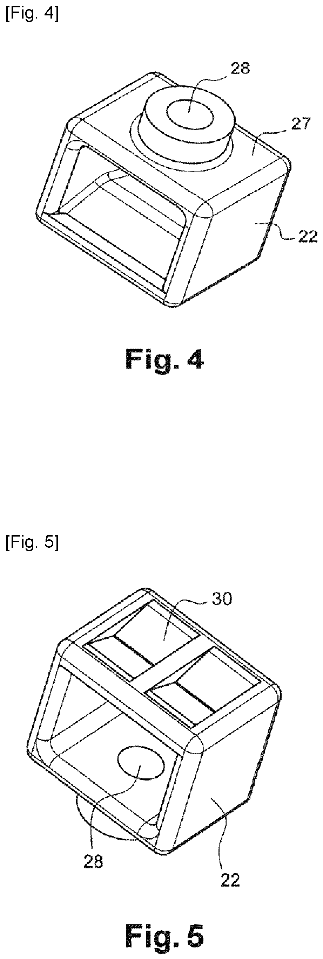

Dans le premier exemple de réalisation ne faisant pas partie de l'invention, le dispositif d'arrimage de câble est constitué d'un support d'arrimage (Fig. 2, Fig. 3) et d'une bague d'arrimage (Fig. 4, Fig. 5). Le support d'arrimage 10 comporte à son extrémité inférieure une base 11 d'appui sur le socle 1 et une languette 12 destinée à être insérée dans la fente 9 du socle 1 pour assurer la stabilité de la position du support d'arrimage sur le socle 1. Le support d'arrimage 10 présente une partie inférieure 13 apte à recevoir un collier de fixation de la gaine d'un câble contre sa face intérieure 14, qui est garnie de nervures 15 de retenue de la gaine du câble.

Le support d'arrimage 10 présente une partie centrale 16 comportant une ceinture 17 libérant une ouverture inférieure 18 apte à recevoir un arceau 5 du socle 1. La ceinture 17 présente, au-dessus de l'ouverture 18, une découpe définissant un doigt 19 doué d'une certaine élasticité. Le doigt 19 porte sur sa face intérieure, un cran 20 d'encliquetage sous le sommet 8 de l'arceau 5.

Le support d'arrimage 10 présente une partie supérieure 21 assurant la fonction d'arrimage du câble en coopération avec une bague d'arrimage 22 (Fig. 4, Fig. 5). Sur sa face intérieure 23, la partie supérieure 21 du support d'arrimage 10 présente un profil en creux, et sur sa face opposée, elle porte un guide 24 cylindrique pour une vis 25 portée par la bague d'arrimage 22.

Le support d'arrimage 10 porte à son extrémité supérieure deux ailettes 26 élastiques aptes à se déformer lors de l'insertion de la bague d'arrimage 22 sur la partie supérieure 21 du support d'arrimage 10, et ensuite à empêcher la bague d'arrimage 22 de quitter le support d'arrimage 10 tant qu'elle n'est pas en situation d'arrimage.

La bague d'arrimage 22 (Fig. 4, Fig. 5), est de section sensiblement carrée pour permettre sa mise en place sur la partie supérieure 21 du support d'arrimage 10. Sur l'une 27 de ses faces extérieures, elle présente un taraudage 28 lui permettant de porter une vis 29. Sur la face opposée, elle présente un profil en creux 30, apte à coopérer avec le profil en creux de la face intérieure 23 du support d'arrimage pour assurer l'arrimage du câble.

Le socle 1 avec ses arceaux 5, est mis en place dans le contenant du boîtier d'épissurage optique, au droit d'un port d'entrée de câbles, et il y est fixé par vissage de l'écrou 2 extérieur au contenant. Chaque câble à arrimer arrive par le passage axial 3 du socle 1.

L'extrémité du câble est préparée de manière classique par enlèvement de la gaine extérieure, découpe des mèches d'aramide et du porteur, tressage des mèches d'aramide et terminaison par un nœud. Le dispositif d'arrimage est alors librement présenté à l'extrémité du câble. La face intérieure 14 de la partie inférieure 13 du support d'arrimage 10 est appliquée contre l'extrémité de la gaine du câble et un collier de serrage est placé autour de la gaine du câble et de la partie inférieure 13 du support d'arrimage 10. Le porteur et les mèches d'aramide sont disposés entre le profil en creux de la face intérieure 23 de la partie supérieure 21 du support d'arrimage, et le profil en creux 30 de la bague d'arrimage 22. La fibre optique du câble n'est pas introduite dans la bague d'arrimage. Les mèches d'aramide, au-delà de la bague d'arrimage 22, font l'objet d'un bouclage autour des ailettes 26.

La vis 29 est alors versée dans le taraudage 28 et elle s'appuie sur le fond du guide 24, ce qui, par réaction, fait reculer la bague d'arrimage 22 perpendiculairement à l'axe longitudinal du support d'arrimage en assurant le bridage du porteur et des mèches d'aramide entre le profil en creux de la face intérieure 23 de la partie supérieure 21 du support d'arrimage 10 et le profil en creux 30 de la bague d'arrimage 22. Les mèches d'aramide, après bouclage autour des ailettes 26, sont ramenées vers la gaine du câble et le collier de serrage assure le serrage de l'extrémité gainée du câble et de l'extrémité des mèches d'aramide. L'arrimage du câble sur le support d'arrimage 10 est ainsi assuré.

Le dispositif d'arrimage est alors rapproché du socle 1. La partie inférieure 13 du support d'arrimage 10 est insérée dans le socle 1, contre un arceau 5. La ceinture 17 de la partie centrale 16 du support d'arrimage 10 est positionnée sur l'arceau 5 par coulissement. Au cours de ce coulissement, la languette 12 à l'extrémité inférieure du support d'arrimage 10 pénètre dans la fente 9 du socle. Au cours du coulissement, le cran 20 d'encliquetage, porté par le doigt 19 de la ceinture 17, glisse sur le contour extérieur du sommet 8 de l'arceau 5, en repoussant le doigt 19 vers l'extérieur.

En fin de coulissement, le cran 20 assure l'encliquetage sous le sommet 8 de l'arceau 5, et la base 11 du support d'arrimage arrive en appui sur le socle 1. L'opération d'arrimage du câble est alors terminée.

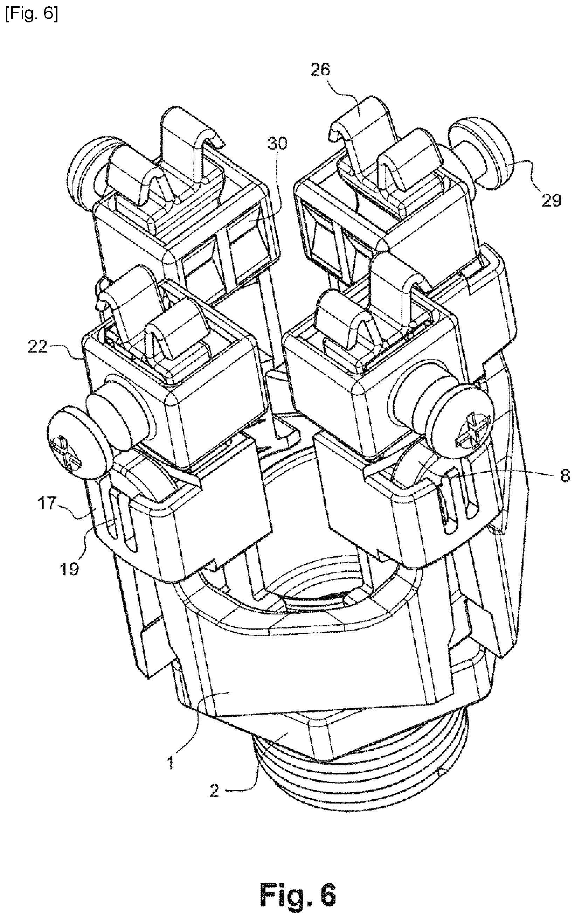

Le dispositif d'arrimage présente un nombre de pièces réduit (un support d'arrimage, une bague d'arrimage et une vis), assurant à la fois le bridage du porteur du câble, le bouclage et le bridage des mèches d'aramide, et le serrage du câble et des mèches d'aramide par un collier sur le support d'arrimage. Le câble une fois arrimé sur le dispositif d'arrimage, celui-ci est mis en place sur le socle par encliquetage, pratiquement sans interaction avec d'autres éléments du boîtier d'épissurage optique. La présence de plusieurs emplacements d'encliquetage sur le socle permet de garder un alignement satisfaisant des câbles par rapport au port d'entrée en cas d'installation de plusieurs câbles dans le même port d'entrée (Fig. 6).

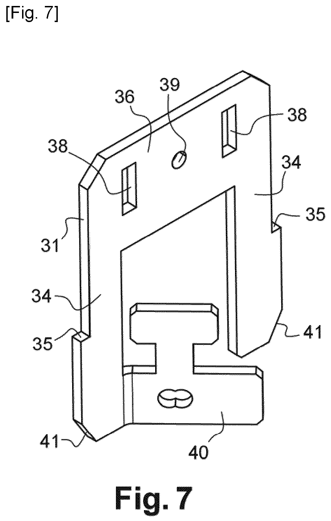

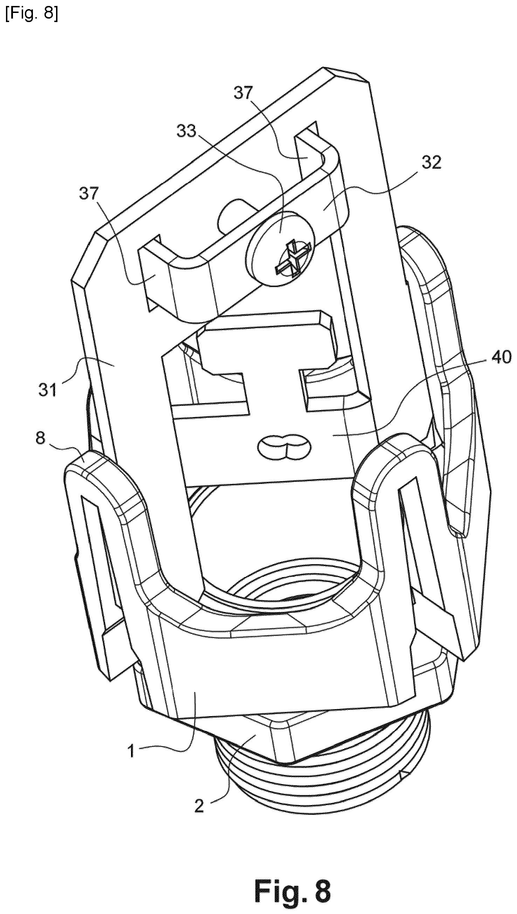

Selon le deuxième exemple de réalisation, faisant partie de l'invention (Fig. 7 et Fig. 8), le dispositif d'arrimage est constitué d'un support d'arrimage 31, d'une traverse 32 et d'une vis de fixation 33. Le support d'arrimage 31 est plat, en forme de U, chaque branche 34 du U portant à son bord extérieur un cran 35 d'encliquetage à un arceau 5 du socle 1. Le support d'arrimage 31 est dimensionné pour être encliqueté sur deux arceaux 5 opposés du socle 1. La traverse 32 est sensiblement parallèle à la base 36 du U. Elle a deux extrémités 37 coudées vers la base 36 du U et guidées par des fentes 38 de la base 36 du U. La vis de fixation 33 coopère avec un taraudage 39 de la base 36 du U pour ramener la traverse 32 vers la base 36 du U.

Le support d'arrimage 31 porte, près de l'extrémité de l'une des branches 34 du U, sur le bord intérieur de la branche, un volet 40 de bridage du câble. Le volet 40 est situé dans un plan distinct du plan général du support d'arrimage en U de façon à libérer le port d'entrée du câble. En effet, ce mode de réalisation du dispositif d'arrimage de câble pour boîtier d'épissurage optique est plus particulièrement orienté vers un câble de grande dimension transversale par rapport au port d'entrée.

Dans ce mode de réalisation, le porteur et les mèches d'aramide sont bridés entre la traverse 32 et la base du U du support d'arrimage 31, et le serrage du câble et des mèches d'aramide est assuré par un collier sur le volet de bridage 40. Une fois l'arrimage du câble assuré sur le dispositif d'arrimage, celui-ci est rapproché du socle et le support d'arrimage 31 est disposé diamétralement, entre deux arceaux 5 opposés du socle 1, et descendu vers le port d'entrée du câble. Les bords extérieurs des extrémités des branches 34 du U présentent des pans obliques 41 qui provoquent l'écartement vers l'extérieur des sommets 8 des arceaux 5 destinés à recevoir le dispositif d'arrimage.

Lorsque les crans 35 d'encliquetage ont franchi le côté intérieur du sommet 8 des arceaux 5, les arceaux 5 reprennent leur position de repos et l'encliquetage est assuré, parachevant ainsi l'arrimage du câble.

Les avantages du système d'arrimage de câble au contenant d'un boîtier d'épissurage optique selon l'invention sont notamment :
- de pouvoir manipuler aisément les pièces sans contrainte locale ;
- de préparer et mettre en place les éléments du câble (porteur et mèches d'aramide) à deux mains ;
- de serrer ces éléments sans aide extérieure en matériel ou en personnel, avec un simple tournevis ;
- de boucler les mèches d'aramide sans contrainte pour les arrimer en même temps que la gaine du câble sur le support d'arrimage avec un même collier.

## Revendications

1. Système d'arrimage de câble au contenant d'un boîtier d'épissurage optique, comportant :
- un socle (1) fixable au port d'entrée des câbles dans le contenant, présentant un passage (3) axial pour les câbles, ayant un pourtour (4) cylindrique comportant plusieurs arceaux (5), répartis sur ledit pourtour cylindrique et d'axe parallèle à l'axe du socle ;
- et au moins un dispositif d'arrimage de câble, indépendant du socle (1), et apte à être fixée au socle par coopération mécanique avec au moins un arceau (5) du socle (1), **caractérisé en ce que** le dispositif d'arrimage est constitué d'un support (31) d'arrimage plat en forme de U et d'une traverse (32) sensiblement parallèle à la base (36) du U, cette traverse ayant deux extrémités (37) coudées guidées par des fentes (38) du support d'arrimage ; et d'une vis (33) de fixation de la traverse (32) à la base (36) du U, pour assurer l'arrimage, chacune des branches (34) du U portant à l'extérieur un cran (35) d'encliquetage à un arceau (5) du socle, le support d'arrimage étant dimensionné pour être encliqueté sur deux arceaux diamétralement opposés du socle.

2. Système d'arrimage de câble selon la revendication 1, **caractérisé en ce que** le support d'arrimage porte près de l'extrémité de l'une des branches (34) du U, sur le bord intérieur de la branche, et dans un plan distinct du plan général du U, un volet (40) de bridage du câble.

## Patentansprüche

1. System zur Sicherung von Kabeln am Gehäuse einer optischen Spleißbox, umfassend:
- einen am Anschluss zur Einführung der Kabel in das Gehäuse befestigbaren Sockel (1), der einen axialen Durchgang (3) für die Kabel aufweist und eine zylindrische Umrandung (4) aufweist, die mehrere Bögen (5) umfasst, die auf der zylindrischen Umrandung verteilt sind und eine zur Achse des Sockels parallele Achse aufweisen;
- und mindestens eine Kabelsicherungsvorrichtung, die vom Sockel (1) unabhängig ist und geeignet ist, am Sockel durch mechanisches Zusammenwirken mit mindestens einem Bogen (5) des Sockels (1) befestigt zu werden, **dadurch gekennzeichnet, dass** die Sicherungsvorrichtung aus einem flachen, U-förmigen Sicherungshalter (31) und einer zur Basis (36) des U im Wesentlichen parallelen Querstrebe (32) besteht, wobei diese Querstrebe zwei abgewinkelte Ende (37) aufweist, die von Schlitzen (38) des Sicherungshalters geführt werden; und aus einer Schraube (33) zur Befestigung der Querstrebe (32) an der Basis (36) des U, um die Sicherung sicherzustellen, wobei jeder der Schenkel (34) des U außen eine Rastkerbe (35) zum Einrasten in einen Bogen (5) des Sockels trägt, wobei der Sicherungshalter dafür bemessen ist, in zwei einander diametral gegenüberliegende Bögen des Sockels eingerastet zu werden.

2. System zur Sicherung von Kabeln nach Anspruch 1, **dadurch gekennzeichnet, dass** der Sicherungshalter in der Nähe des Endes eines der Schenkel (34) des U, am inneren Rand des Schenkels und in einer von der allgemeinen Ebene des U verschiedenen Ebene, eine Klappe (40) zum Festklemmen des Kabels trägt.

## Claims

1. System for anchoring a cable to the container of an optical splice enclosure, having:
- a plinth (1) that can be fastened to the port for entry of the cables into the container, having an axial passage (3) for the cables, having a cylindrical perimeter (4) having a plurality of arches (5), which are distributed over said cylindrical perimeter and of axis parallel to the axis of the plinth;
- and at least one cable anchoring device, independent of the plinth (1), and able to be fastened to the plinth by mechanical cooperation with at least one arch (5) of the plinth (1), **characterized in that** the anchoring device is constituted of a flat U-shaped anchoring support (31) and a crossmember (32) substantially parallel to the base (36) of the U, this crossmember having two bent ends (37) guided by slots (38) in the anchoring support; and a screw (33) for fastening the crossmember (32) to the base (36) of the U, so as to ensure the anchoring, each of the branches (34) of the U bearing on the outside a catch (35) for snap-fastening to an arch (5) of the plinth, the anchoring support being dimensioned so as to be snap-fastened onto two diametrically opposite arches of the plinth.

2. Cable anchoring system according to Claim 1, **characterized in that** the anchoring support bears, near the end of one of the branches (34) of the U, on the inner edge of the branch, and in a plane that is distinct from the general plane of the U, a flap (40) for restraining the cable.
